**Europäisches Patentamt**

(19) **European Patent Office**

**Office européen des brevets**

(11) Veröffentlichungsnummer: **0 118 575**

**A1**

(12) # EUROPÄISCHE PATENTANMELDUNG

(21) Anmeldenummer: **83102413.8**

(51) Int. Cl.³: **B 29 D 27/04**

(22) Anmeldetag: **11.03.83**

(43) Veröffentlichungstag der Anmeldung:
**19.09.84** Patentblatt **84/38**

(84) Benannte Vertragsstaaten:
**AT CH DE FR GB IT LI NL**

(71) Anmelder: **Hahn, Ortwin, Prof. Dr.-Ing.**
**Scherfeder Strasse 48**
**D-4790 Paderborn(DE)**

(71) Anmelder: **Wimmer, Gottfried**
**Schwaneyer Weg 12**
**D-4790 Paderborn(DE)**

(72) Erfinder: **Hahn, Ortwin, Prof. Dr.-Ing.**
**Scherfeder Strasse 48**
**D-4790 Paderborn(DE)**

(74) Vertreter: **Hanewinkel, Lorenz, Dipl.-Phys. et al,**
**Patentanwälte Dr.Ing. Heinz Nickels Dipl.-Phys. Lorenz**
**Hanewinkel Detmolder Strasse 26**
**D-4800 Bielefeld 1(DE)**

(54) **Formwerkzeug aus mindestens drei Teilwerkzeugen zur Herstellung von Formlingen aus schäumbarem Kunststoff.**

(57) Das Formwerkzeug besteht aus Teilwerkzeugen (F11, F12), die an zum Öffnen und Schließen verschieblich gelagerten Schilden (S1, S2) befestigt sind und einen Formhohlraum (FH) umschließen, und mindestens einem weiteren Teilwerkzeug (F1, Q), das den Formhohlraum (FH) in mehrere Formhohlräume aufteilt und/oder das in den Formhohlraum (FH) hineinragt. Das weitere Formwerkzeug (FH, Q) ist auf Führungssäulen (B1, B2) oder im Teilwerkzeug (F11) verschieblich gelagert und wird durch Mitnehmer (MN1, 2) oder einen Schieberantrieb (AS) betätigt.

Alle Teilwerkzeuge enthalten mindestens einen Medienraum (MR1 bis 5), der entweder durch Düsen (D) mit dem Formhohlraum (FH) verbunden ist oder an einen Heiz-/Kühlkreislauf angeschlossen ist. Teilwerkzeuge mit dünnwandigen und/oder elastischen Formwänden (FW1, 2, 4) und Verfahren zum Betrieb des Formwerkzeuges sind beschrieben.

./...

Croydon Printing Company Ltd.

Fig.6

Formwerkzeug aus mindestens drei Teilwerkzeugen
zur Herstellung von Formlingen aus schäumbarem
Kunststoff

Die Erfindung betrifft ein Formwerkzeug zur Herstellung eines Formlings aus schäumbarem Kunststoff, bei dem Teilwerkzeuge zwischen zwei zum Öffnen und Schließen verschieblichen Schilden gehaltert sind und im geschlossenen Zustand einen Formhohlraum umschließen und mit einer Ver-/Entsorgungsvorrichtung jeweils verbunden sind, von der Kunststoff und Prozeßdampf, Druckluft und/oder Vakuum, dem Formhohlraum und Heiz-, Kühlmittel und/oder Vakuum den Formwänden über mindestens einen Medienraum steuerbar zuführbar sind.

Die bekannten Formwerkzeuge bestehen aus zwei Teilwerkzeugen, die zwischen zwei Schilden gelagert sind. Da die Formwerkzeuge im allgemeinen wesentlich weniger Fläche beanspruchen, als die Schilde bieten, können mehrere neben- oder übereinander montiert und betrieben werden. Bei großflächigen Formlingen z.B. Bauisolierplatten können im allgemeinen aber nur wenige gleichzeitig gefertigt werden, was die Ausnutzung der Anlage einschränkt.

Da die großflächigen Formlinge im allgemeinen nur geringe Dicke relativ zum Öffnungsweg der Schilde aufweisen, ist die Ausnutzung des Arbeitsvolumens der Anlage, das sich aus Querschnitt und Öffnungsweg ergibt, gering. Insbesondere, wenn gleichzeitig wesentlich tiefere Formlinge in parallel betriebenen Formen gefertigt werden, ist auch die Öffnungs- und Schließzeit der Form schlecht genutzt.

Weiterhin ist es ein Nachteil bekannter Formwerkzeuge, daß Längs- oder Querkanäle insbesondere mit im Verhältnis zur Länge geringen Querabmessungen, die z.B. bei Entlüftungskanälen in Bauplatten gefordert sind, mit aus der Spritzgußtechnik bekannten Schiebern wirtschaftlich nicht verwirklichen lassen, da die Sinterung, Verfestigung und Entformung in der Umgebung solcher Schieber nicht mit ausreichender Qualität und in vertretbarer Prozeßzeit möglich ist.

Aus diesem Grunde werden Bauplatten i.a. als Halbplatten gefertigt; die mit ihren Halbkanälen aufeinander gesetzt eingebaut werden. Dies bedeutet eine weitere Absenkung der Leistungsfähigkeit einer Anlage und erfordert doppelte Handhabung beim Einbau der Halbplatten am Bau und eventuell zusätzliche Befestigungsmaßnahmen und -materialien dafür.

Es ist Aufgabe der Erfindung ein Formwerkzeug und Verfahren zu dessen Betrieb zu offenbaren, das bei relativ geringem Mehraufwand ermöglicht, das Arbeitsvolumen einer Sinteranlage weitestgehend auszunutzen und ggf. Formlinge mit schlanken Längs- und/oder Querkanälen einstückig herzustellen.

- 3 -

Die Lösung der Aufgabe besteht darin, daß das Formwerkzeug aus mindestens drei Teilwerkzeugen besteht, die jeweils mindestens einen Medienraum enthalten.

Außer den beiden,üblicher Weise an den Schilden befestigten,Teilwerkzeugen werden in oder zwischen diesen Querschieber z.B. als Form- oder Faconkern und/oder insbesondere flächige, beidseitig mit einer Formwand versehene, Teilwerkzeuge verschieblich angeordnet, und diese werden jeweils nach Bedarf mit Heizung oder Kühlung intern und mit Vakuum,Entsorgung, Prozeßdampf oder Druckluft durch Düsen in Richtung auf den Formhohlraum bzw. Formling oder die Formhohlräume bzw. die Formlinge gesteuert versorgt. Durch die Verwendung von Schiebern können Formlinge mit Querkanälen in voller Stärke einstückig hergestellt werden, und durch das Anordnen der verschieblichen beidseitigen Teilwerkzeuge entstehen in Öffnungsrichtung der Schilde zwei oder mehr Formhohlräume, je nach der Art und Anzahl der Teilwerkzeuge.

Dadurch, daß die verschieblichen Teilwerkzeuge und Querschieber beim Füllen des Formhohlraumes mit Vakuum an ihren Düsen beaufschlagt werden, ergibt sich eine vollständige Füllung um den Querschnitt mit Schäumgut. Das Heizen und die Versorgung mit Prozeßdampf durch die Düsen ermöglicht dort ein verzögerungsfreies vollständiges Versintern des Materials, und die Kühlung ermöglicht eine ausreichende schnelle Verfestigung,die Voraussetzung für eine verformungsfreie Entformung ist.

- 4 -

Für das Entformen der Querschieber und auch der
flachen Teilwerkzeuge, die im allgemeinen ohne Auswerfer ausgeführt sind, wird vorteilhaft Druckluft
den Düsen zugeführt, die ein Ablösen des Formlings
bewirkt und das Herausziehen der Querschieber bzw.
Trennen der Form ermöglicht oder erleichtert.

Sind die Formteile in Öffnungsrichtung so tief, daß
zwei Formlinge hintereinander angeordnet hergestellt
werden können, so wird die Form zweckmäßig symmetrisch zur Mittelebene ausgebildet, und die tieferen
Teilwerkzeuge werden an den Schilden befestigt. Dadurch ergibt sich für das verschiebliche zwischengelagerte Teilwerkzeug ein flacher Aufbau ohne die
Notwendigkeit, einen mechanischen Auswerfer einzubauen. Vorteilhafte konstruktive Gestaltungen
solcher flacher Teilwerkzeuge und Querschieber, die
geringe Wärmekapazität besitzen und ohne hohen Fertigungsaufwand aus Blechen, Rohren und gefrästen
Platten insbesondere mit Elektronenstrahlschweißung hergestellt werden können, sind anhand von Figuren im
weiteren dargestellt.

Es können in vielen Fällen auch vorteilhaft ganze
Bausätze z.B. ein Verpackungskasten und der zugehörige Deckel und weitere Innenstützteile hinter-
und teilweise nebeneinanderliegend in einem Formwerkzeug
gefertigt werden.

Die Anordnung mehrerer Formhohlräume in einem Formwerkzeug bietet außer der erhöhten Leistung der Anlage eine erhebliche Einsparung von Energien bzw.
Betriebsmedien, da geringere thermische Verluste zu den Schilden und Außenwänden auftreten.

Die verschieblichen Teilwerkzeuge werden vorteilhaft auf Führungssäulen geführt, die zweckmäßig mit Auswerfern verbunden werden, die somit über den Antrieb der Schilde betätigt werden und beim Öffnen und Schließen der Form ein- bzw. ausfahren.

Werden die Lagerungen der Führungssäulen als Rohre ausgeführt, so kann deren Innenraum als hydraulicher oder pneumatischer Zylinder dienen und einen steuerbaren Öffnungsantrieb bilden. Auf diese Weise ist es möglich, die Bautiefe des Formwerkzeuges so groß auszulegen, daß bei voll geöffneten Schilden nacheinander jeweils nur ein Formling entformt werden kann, wobei die Öffnung der einzelnen Formhohlräume gesteuert nacheinander erfolgt.

Sofern das Formwerkzeug nur eine so geringe Bautiefe hat, daß alle Formlinge gleichzeitig entformt werden können, wird das gleichmäßige Öffnen durch Anschläge und Mitnehmer, die z.B. an den Führungen angebracht oder als Seil ausgeführt sind, sichergestellt.

In den Ausführungsbeispielen sind einige vorteilhafte Ausgestaltungen der Medienzuführungen zu den verschieblichen Teilwerkzeugen bzw. Querschiebern aufgezeigt, die es ermöglichen, ohne zusätzliche Schlauchleitungen durch Querverbindungen zu den Medienräumen in den benachbarten Teilwerkzeugen direkt mittels Bohrungen, Nuten und/oder Dichtungen oder indirekt über die hohl ausgeführten Führungssäulen die Versorgung und Entsorgung parallel vorzunehmen.

Zu den Ausführungsbeispielen sind jeweils unterschiedliche Varianten der Medienführung und Ausgestaltung der Führungssäulen dargestellt, aus denen je nach Zweckmäßigkeit entsprechend der Sinteranlage und den Formteilen eine geeignete Kombination für den Einzelfall auszuwählen ist. So können z.B. zwei Führungssäulen als Öffnungsantrieb und zwei der Medienzufuhr und als Mitnehmer für Auswerfer dienen. In einer anderen Version können alle vier Führungssäulen zur Medienzufuhr hohl gestaltet sein.

Im allgemeinen benötigen die verschieblichen Teilwerkzeuge drei Versorgungs-/Entsorgungsanschlüsse, wobei einer der Zuführung von Medien zu den Düsen und die anderen der Zu- und Abfuhr von Kühl- oder Heizmedium dienen. Über einen vierten Zuführungsweg kann z.B. ein mechanischer Auswerfer zur Betätigung gesteuert versorgt werden, der erforderlich ist, falls das Auswerfen bei tieferen Teilwerkzeugen durch Zufuhr von Druckluft über die Düsen nicht ausreichend ist.

Die in den Beispielen gezeigten dünnwandig,schichtweise aufgebauten Formwände mit dahinterliegenden Medienräumen sind auch vorteilhaft für die an den Schilden befestigten Teilwerkzeuge einsetzbar , und diese Bauweisen stellen eigenständige Erfindungen dar.

Eine weitere unabhängige Erfindung, die eine vorteilhafte Ausgestaltung insbesondere von Querschiebern und verschieblichen Teilwerkzeugen darstellt, besteht in der Verwendung von elastischen Formwänden, die z.B. aus Silikonkautschuk oder Polytetrafluoräthylen bestehen. Diese gestatten es, wenn in deren Medienraum Heiz- oder Kühlmedium unter Druck eingebracht wird, den Sinterkuchen beim Sintern und/oder Abkühlen in der Nähe der Formwand zusammenzupressen und so vorteilhaft die Ausbildung einer Zone erhöhter Festigkeit zu erreichen. Bei anschließendem Abbau des Druckes entformt sich die Oberfläche, und insbesondere die Querschieber lassen sich problemlos entfernen. Weiterhin bewirkt ein Aufblähen der Formwand der feststehenden oder verschieblichen Teilwerkzeuge nach dem Öffnen der Form ein Ablösen des Formlings, wodurch unter Umständen ein Auswerfer erübrigt werden kann.

Um die Maßhaltigkeit des Formlings insbesondere der Hohlräume zu gewährleisten, werden die elastische Formwände vorzugsweise mit Armierungen und Stützkonstruktionen, wie sie z.B. auch in den Plattenkonstruktionsbeispielen gezeigt sind, versehen, durch die die Ausdehnung unter Druck beschränkt und andererseits die Ausgangslage bestimmt wird.

Insbesondere im Fall, daß keine Armierung vorgesehen ist, kann die Volumenvergrößerung von der Ausgangsform auch durch das Einbringen eines zusätzlichen Medienvolumens, insbesondere von Flüssigkeiten, das Maß der Ausdehnung oder Verformung festgelegt werden.

Eine Umsetzung oder Vertauschung der zirkularen und planaren Konstruktionen aus den Beispielen und die Bildung verschiedener möglicher Kombinationen aus starren und elastischen Funktionselementen liegt im Rahmen des fachmännischen Könnens.

- 8 -

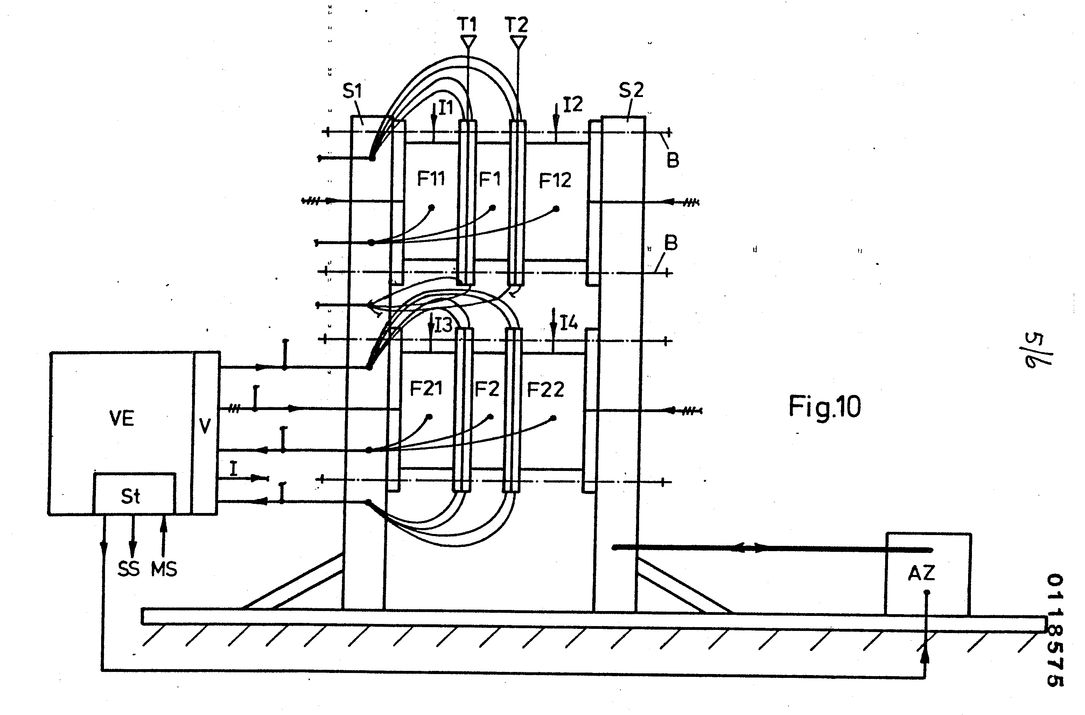

In den Figuren 1 bis 14 sind verschiedene Ausführungsformen und Details der Erfindung dargestellt.

Fig. 1  zeigt einen Querschnitt durch die Hälfte zur
Mittellinie symmetrischer Teilwerkzeuge,

Fig. 2  zeigt einen Ausschnitt eines Querschnittes
eines               Teilwerkzeuges in anderer Ausführung mit einem Medienraum,

Fig. 3  zeigt eine alternative Ausführung zu Fig. 2
mit zwei Medienräumen,

Fig. 4  zeigt einen senkrechten Schnitt durch das
Teilwerkzeug Fig. 3,

Fig. 5  zeigt eine weitere alternative Ausführung
zu Fig. 3,

Fig. 6  zeigt einen Ausschnitt eines Querschnittes
durch Teilwerkzeuge in unterschiedlichem
Aufbau zu Fig. 1 und mit einem Querschieber,

Fig. 7  zeigt schematisch die Anordnung eines doppelten
Formwerkzeuges mit Querschiebern zwischen geschlossenen Schilden,

Fig. 8  zeigt schematisch die Anordnung eines doppelten
Formwerkzeuges mit Öffnungsantrieb zwischen geschlossenen Schilden,

Fig. 9  zeigt einen Ausschnitt eines Querschnittes
eines in die Führungssäulen integrierten
Öffnungsantriebes,

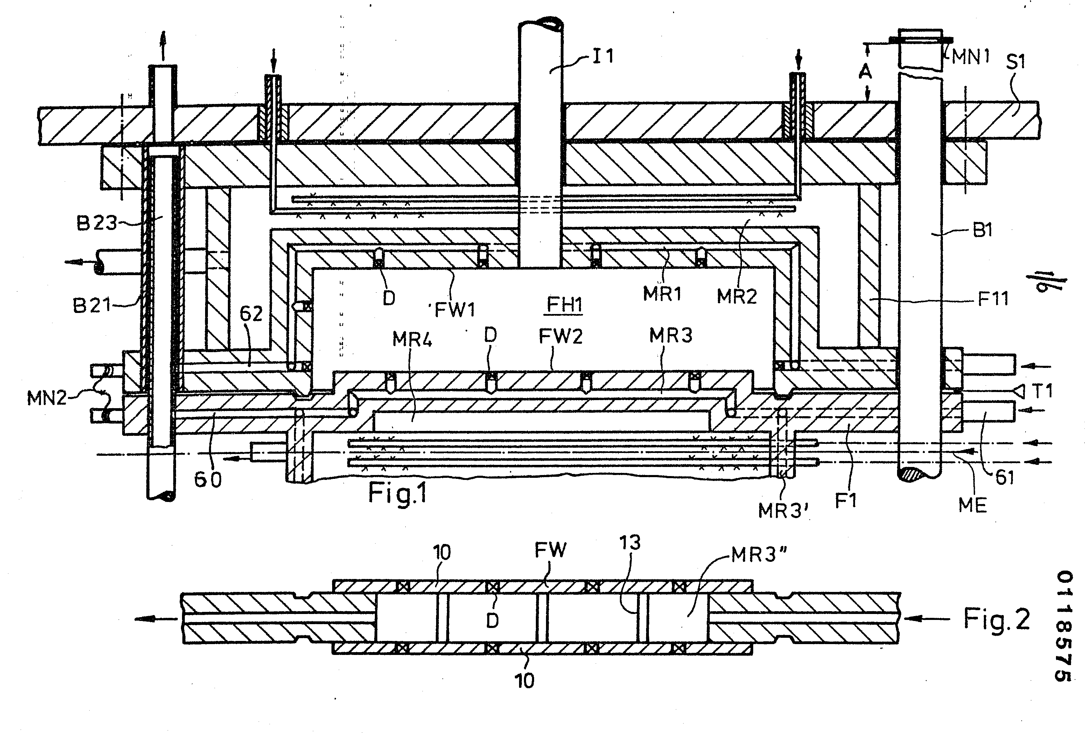

Fig. 1o  zeigt schematisch einen Aufriß einer Anlage
mit zwei Formwerkzeugen und Versorungs-/Entsorgungsvorrichtung,

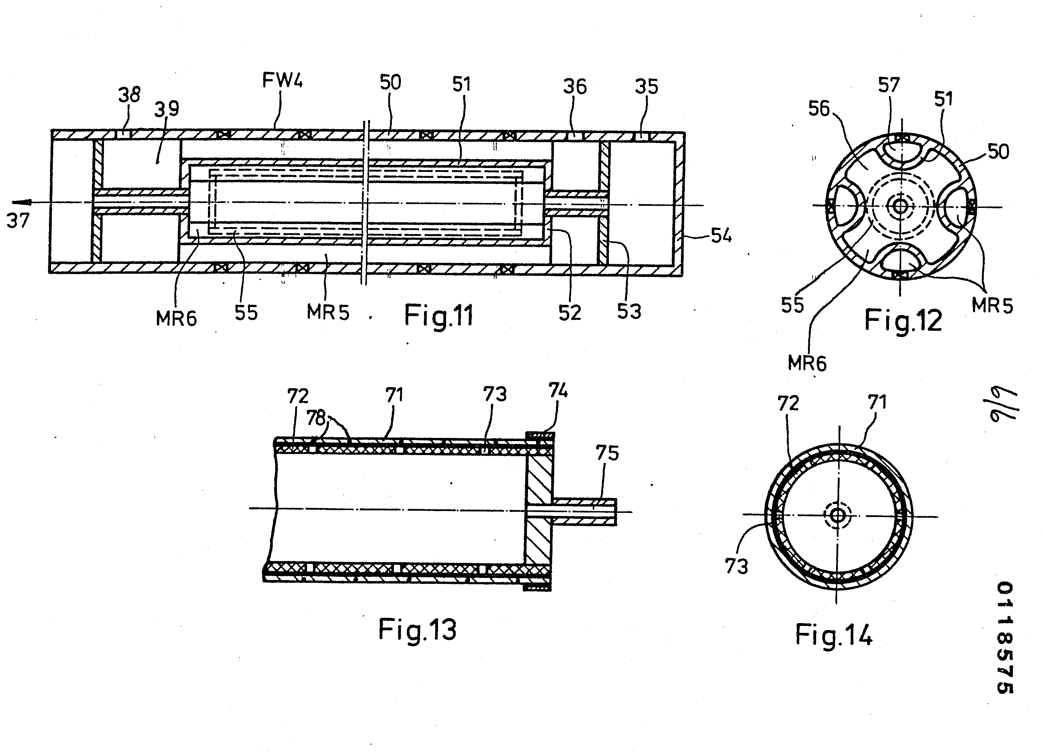

Fig. 11 zeigt einen Längsschnitt-gekürzt-eines Querschiebers mit zwei Medienräumen,

Fig. 12 zeigt einen Querschnitt durch den Querschieber
Fig. 11,

Fig. 13 zeigt einen Längsschnitt verkürzt durch einen
Querschieber mit einem Medienraum und elastischer
Formwand,

Fig. 14 zeigt einen Querschnitt durch den Querschieber
Fig. 13.

Fig. 1 zeigt einen Schnitt, in Öffnungsrichtung der Schilde
verlaufend, durch eine Hälfte eine Doppelwerkzeuges, das
symmetrisch zur Mittellinie ME aufgebaut ist. Die Ausgestaltung der linken und rechten Hälfte entspricht verschiedenen Ausführungsformen. An dem Schild S1 ist das
Teilwerkzeug F11 befestigt. Dieses Teilwerkzeug F11 besitzt in bekannter Weise einen Medienraum MR2 mit Anschlüssen zum Heizen und Kühlen der Formwand FW1. Außerdem sind in dieser Formwand Düsen D eingebaut, über die
ein, aus in der Formwand verlaufenden Bohrungen bestehender, weiterer Medienraum MR1 mit dem Formhohlraum FH1
verbunden ist. In den Formhohlraum FH1 ist ein Injektor
I1 geführt, durch den der vorgeschäumte Kunststoff zugeführt wird.

Zwischen dem Teilwerkzeug F1 und dem symmetrisch angeordneten, nicht dargestellten sind Führungssäulen B1, B23
verschieblich angeordnet, auf denen ein weiteres Teilwerkzeug F1 gelagert ist. Dieses Teilwerkzeug enthält
ebenfalls Medienräume MR3, MR4, die entsprechend durch
Düsen mit dem Formhohlraum FH1 und dem dazu symmetrischen
verbunden sind; bzw. dem Heizen oder Kühlen der Formwand
FW2 dienen. Die Versorgungsanschlüsse der Medienräume
MR1÷4 sind durch den Schild S1 und die Formwände mit

- 1o -

Anschlußnippeln herausgeführt. In einer vorteilhaften Ausgestaltung sind die Medienräume MR1,MR3 durch Bohrungen 62,6o in die hohl ausgebildete Führungssäule B23 geführt, die in einer Führungsbuchse B 21 im Teilwerkzeug F11 lagert. Über deren Innenraum ist die Versorgung mit einem Nippel herausgeführt. Somit erübrigen sich störanfällige Schlauchleitungen. Auch die weiteren Führungssäulen können entsprechend für die Verbindung zu weiteren Versorgungsanschlüssen ausgebildet sein.

In der rechten Bildhälfte ist die Führungssäule B1 durch den Schild S1 hindurchreichend gezeigt. Die verschiebliche Führung erfolgt zweckmäßig im Schild S1 oder im Teilwerkzeug F11, wobei in der jeweils anderen Durchführung ausreichend Toleranzspiel bleibt. Die Führungssäulen können auch die sogenannten Maschinensäulen sein, durch die die Schilde S1,S2 zueinander parallel geführt werden, falls sich das Formwerkzeug über die Breite oder Höhe des Schildes erstreckt oder an einer Ecke angeordnet ist.

Der Öffnungsweg der Teilformen F11,F1,F12 gegeneinander wird durch Mitnehmer MN1,MN2 bestimmt, die an den Führungssäulen B1 oder in Form eines Stahlseiles, das jeweils zwischen den Teilwerkzeugen F11,F1 bzw. F1,F12 befestigt ist, mit einer solchen freien Länge A angebracht, daß die Formlinge ausgestoßen bzw. entnommen werden können, wenn die Schilde aufgefahren sind.

Fig. 2 zeigt einen anderen Aufbau des Teilwerkzeuges F1, das insbesondere für Formlinge mit einer relativ ebenen Seite geeignet ist. Die Formwände FW sind aus dünnen Platten mit geringer Wärmekapazität aufgebaut und durch Rippen 13 zur Formstabilität abgestützt.
Wegen der geringen Wärmekapazität ist nur ein Medienraum MR3" vorgesehen, da die Erwärmung durch querströmenden Heizdampf und/oder Prozeßdampf erfolgt
und die Kühlung durch Vakuum und/oder Druckluft leicht
möglich ist.

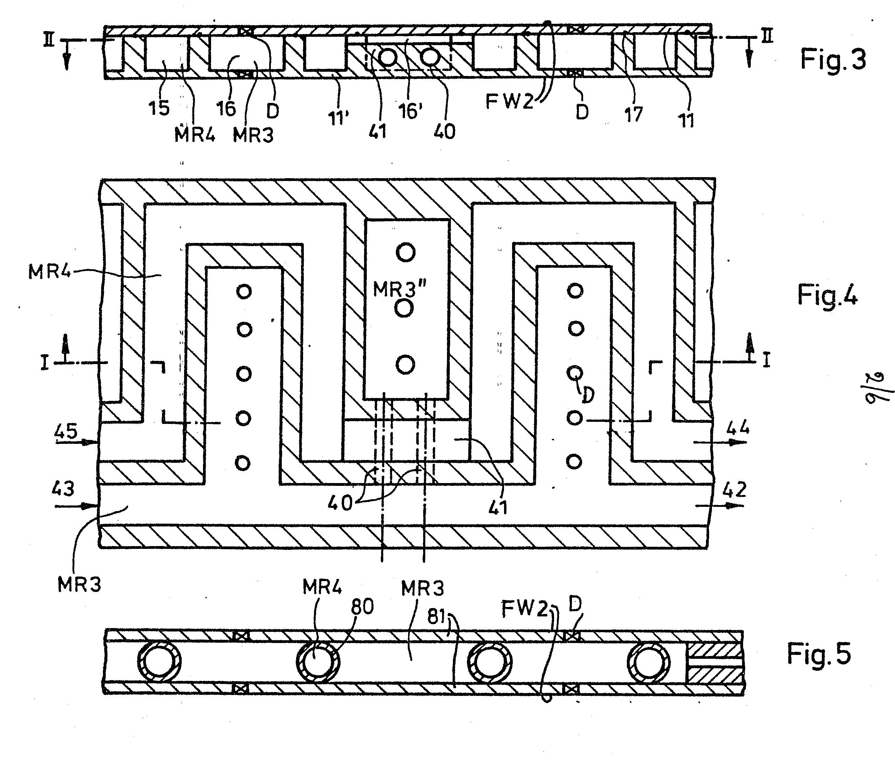

Fig. 3 zeigt eine weitere Ausgestaltungsmöglichkeit
der zweiseitigen Formwand FW2,die zur Erreichung sehr
kurzer Heiz- und Kühlzeiten einen weiteren Medienraum MR4 enthält, der entsprechend der Darstellung in
Fig. 4, die einen Parallelschnitt zur Formwand FW2
zeigt, mäanderförmig,alternierend zum ersten Medienraum MR 3 in der Formwand verläuft.

In die Platte 11' sind die Medienräume MR3,MR4 als
Nuten 16,15 eingegossen oder gefräst. Die Restwand
11' bildet die eine Formwand FW2. Die Nuten sind
durch eine relativ dünne Platte 11 abgedeckt. Die
Medienräume MR3,MR4 sind entlang der Stege, die
zwischen den Nuten stehengelassen sind, durch Löten,
Kleben oder Schweißen, insbesondere Elektronenstrahlschweißen durch die dünne Platte 11 hindurch, an
den Linien 17 dicht verbunden.

Zur Verbindung von Teilmedienräumen MR3", die von
dem anderen Medienraum MR4 umgeben sind, sind Bohrungen 40 quer durch einen weniger tief ausgefrästen
Quersteg 41 zu dem anderen Teilmedienraum MR3 geführt.

Die gezeigte Plattenkonstruktion eignet sich auch
für Formwände, die nur einseitig genutzt werden.
Auch können nach der gleichen Methode weitere zu
den Medienräumen MR3,MR4 unabhängige abgedichtete
Abschnitte hergestellt werden,durch die z.B. der Injektor, ein Auswerfer oder ähnliches hindurchgeführt wird.

Eine weitere Ausführungsart der beidseitigen Formwand FW2 zeigt Fig. 5. Dort ist der Medienraum MR4
als mäanderförmiges Rohr 8o ausgebildet, das beidseitig mit Platten 81 belegt ist. Die Zwischenräume zwischen den Windungen des Rohres 8o und den
Platten 81 dienen als weiterer Medienraum MR3. Die
Rohre 8o können auch rechteckigen Querschnitt besitzen. Zur guten Verbindung der Platten zum Rohr
ist eine Lötung oder Schweißung vorgesehen.

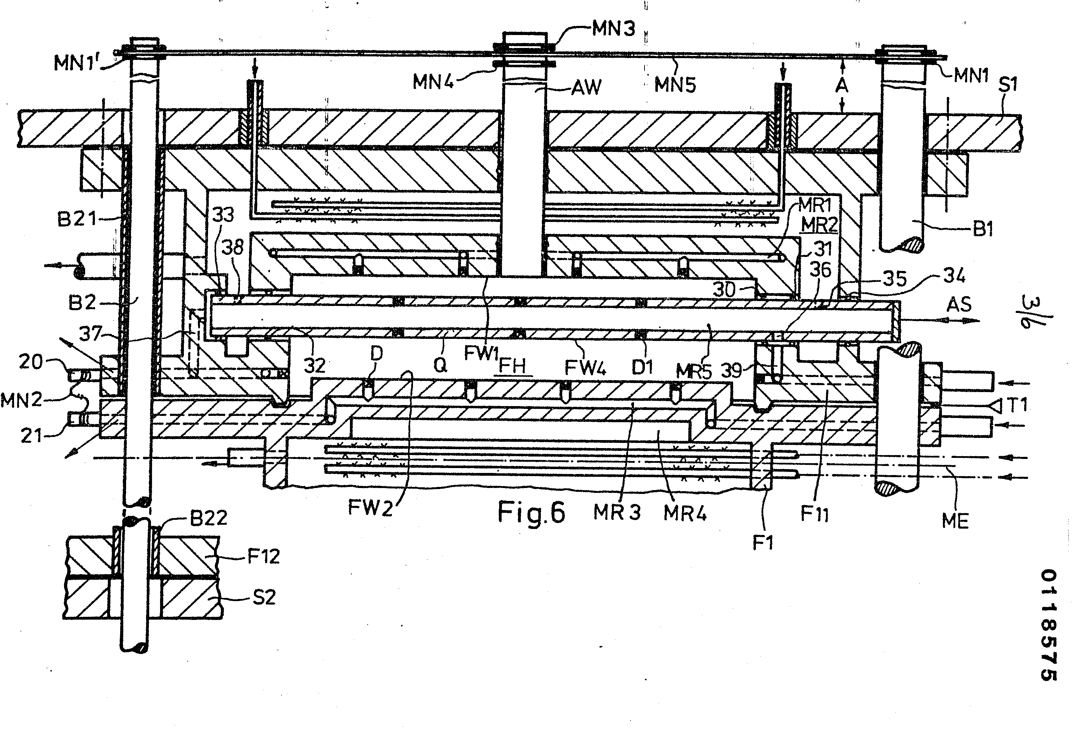

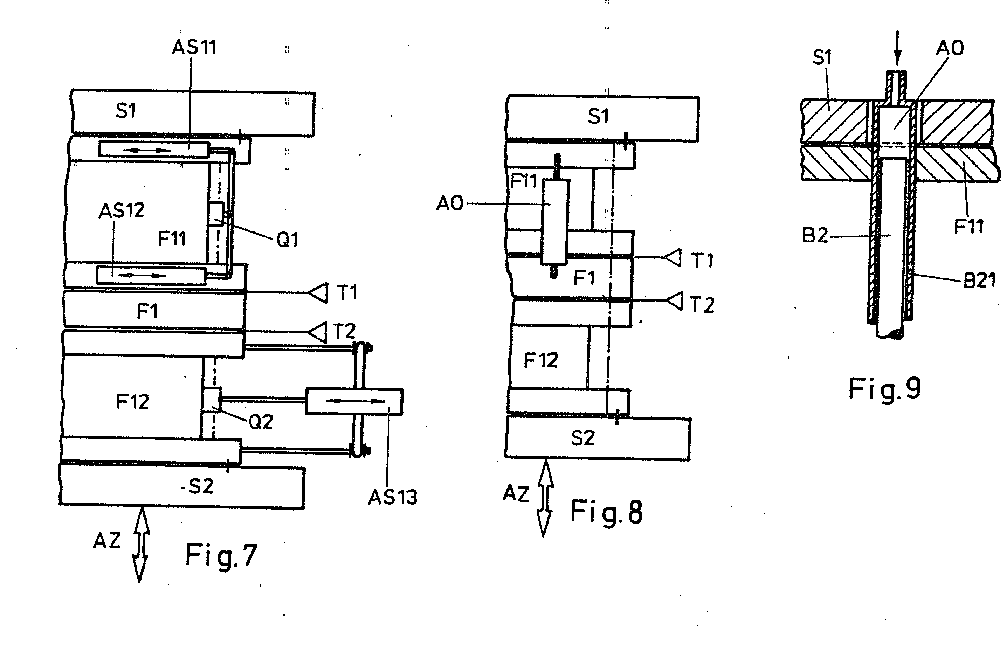

Fig. 6 zeigt ein Teil eines Formwerkzeuges im
Schnitt ähnlich zu Fig. 1 mit weiteren Unterschieden
der Ausgestaltung. Die Führungssäule B2 ist in einer
Führungsbuchse B21 in den Teilwerkzeugen F11 und F12
gelagert. Die Führungssäulen B1 und B2 ragen über
die Schilde S1,S2 hinaus und tragen an ihren Enden
Mitnehmer MN1,MN1', die durch einen weiteren Mitnehmer MN5, der als Quersteg ausgebildet ist, mit
einem Auswerfer AW über Mitnehmer MN3,MN4 so verbunden sind, daß beim Öffnen/Schließen des Formwerkzeuges der Auswerfer in den Formhohlraum eingeschoben
bzw. aus diesem herausgezogen wird. Ein separater
Auswerferantrieb entfällt somit. Diese vorteilhafte
Mitnehmerausführung läßt sich selbstverständlich auch
an den Führungssäulen B23,B2 nach Fig. 1 und Fig. 9
bei geeigneter Herausführung und Abdichtung anbringen.
Die Anordnung des Injektors ist in Fig. 6 nicht dargestellt, da er nicht sichtbar,senkrecht zur Zeichenebene vorgesehen ist.

- 13 -

In den Formhohlraum FH ist quer zur Öffnungsrichtung
der Querschieber Q eingesetzt, der in dem Teilwerkzeug verschieblich gelagert ist und mit einem Schieberantrieb AS zum Einbringen und Herausziehen verbunden
ist. Der Querschieber enthält einen Medienraum MR5, der
mit Düsen D1 zum Formhohlraum FH in Verbindung steht.
Die Medienversorgung erfolgt vorteilhaft von dem Medienraum MR 1 in der Formwand FW1 des Teilwerkzeuges über
Bohrungen und Nuten 36,37,39. Sofern ein weiterer
Medienraum MR6, wie in Fig. 11 und 12 gezeigt, im
Querschieber Q vorhanden ist, kann dieser in entsprechender Weise über Bohrungen 35,38 mit dem Medienraum MR2 für das Heiz- und Kühlmedium bzw. die zugehörige Entsorgung verbunden sein. Die Durchführungswege sind durch Dichtungen 3o+34 gegeneinander und
nach außen zweckmäßig getrennt.

Der Querschieber ist als dünnwandiges Hohlprofil z.B. als
Rohr mit geringer Wärmekapazität und vorzugsweise
guter Wärmeleitfähigkeit aus Aluminium oder Kupfer
gefertigt. Es können auch mehrere solcher Querschieber
Q auch in verschiedenen Richtungen durch den Formhohlraum FH hindurch oder in ihn hineinragend und in unterschiedlicher Ausgestaltung vorgesehen sein. Auch
können Querschieber Q sowohl in den feststehenden als
auch den verschieblichen Teilwerkzeugen F11,F1,F12
gelagert sein.

In Fig. 7 ist schematisch die Draufsicht auf ein
Doppelformwerkzeug dargestellt, bei dem Querschieber
Q1,Q2 jeweils in den Teilwerkzeugen F11,F12 eingesetzt sind, die durch die an dem jeweiligen Teilwerkzeug befestigte Schieberantriebe AS11,AS12;AS13 über
Gestänge betätigt werden. Es sind zwei verschiedene Ausführungen dargestellt.
Das Herausziehen kann entweder nach dem Erkalten des
Sinterkuchens unter die Entformungstemperatur und des Absinken des Sinterdrucks unter den Entformungsdruck
bei noch geschlossener Form erfolgen, sofern eine
Entformung des Querschiebers Q z.B. durch Beaufschlagung der Düsen D mit Druckluft nicht vollständig möglich ist, wodurch ein Verziehen des
Formlings vermieden wird. Ist die Entformung des
Querschiebers jedoch bereits vollständig erreicht,
so kann das Herausziehen während des Öffnens der
Form erfolgen, wodurch Zeit eingespart wird, die
allerdings unter Umständen teilweise für das dann
nach dem Öffnen erfolgende Auswerfen wieder verbraucht wird.

Fig. 8 zeigt schematisch weitere Details der Ansicht
der Anlage von oben. Die strichpunktierte Linie
stellt die Führungssäule für das verschieblich Teilwerkzeug F1 dar. Beim Öffnen der Schilde S1,S2
trennen sich die Teilwerkzeuge an den Trennebenen
T1,T2. Sofern bei voll geöffneten Schilden der
Öffnungsweg nicht ausreicht, daß beide Formlinge,
die von den Teilwerkzeugen F11,F1 bzw. F12,F1 umschlossen werden, gleichzeitig ausgeworfen werden
können, ist es vorteilhaft, wie gezeigt, einen
Öffnungsantrieb AO für eines der Teilwerkzeugpaare vorzusehen, der dieses so lange geschlossen
hält, bis der erste Formling entformt ist,und dann
das verschiebliche Teilwerkzeug F1 aufschiebt, damit
der zweite Formling ausgeworfen werden kann.

Eine entsprechende Anordnung kann auch für Formwerkzeuge mit weiteren verschieblichen Teilwerkzeugen bzw.
Trennebenen vorgesehen werden.Eine besonders vorteilhafte Ausgestaltung des Öffnungsantriebes AO ist in
Fig. 9 dargestellt. Dort ist die Führungssäule B2
als Kolben und die Führungsbuchse B 21 als Zylinder eines hydraulichen oder pneumatischen Betätigers
ausgebildet. Dadurch entfällt eine separate Antriebsvorrichtung zum Verschieben des Teilwerkzeuges.

In Fig. 1o ist schematisch ein Seitenriß einer Gesamtanlage dargestellt. Das linke Schild S1 ist feststehend und das rechte Schild S2 ist parallelverschieblich gelagert und durch den Öffnungs-/Schließantrieb AZ betätigbar. Es sind übereinander zwei
dreiteilige Formwerkzeuge F11,F1,F12;F21,F2,F22 an
den Schilden angeordnet, wobei die Führungssäulen
B jeweils strichpunktiert schematisch gezeigt sind.

Die Formhohlräume werden von oben durch die Injektoren
I1 bis I4 jeweils mit Kunststoff gefüllt. Sämtliche
Medien zum Heizen, Kühlen, Sintern, Auswerfen usw.
werden von der Ver-/Entsorgungsvorrichtung VE über
eine Installation den Teilwerkzeugen entsprechend
den vorhandenen Medienräumen zugeführt. Die schematisch
gezeigten Schlauchleitungen können entsprechend den
bereits gezeigten Beispielen auch fest installiert
sein bzw. über hohle Führungssäulen zugeführt sein.

Die Versorgungsvorrichtung enthält einen Ventilsteuerblock V, der auch an den Schilden angeordnet sein
kann, mit einzeln steuerbaren Ventilen, deren Steuersignale von einer Steuervorrichtung St geliefert
werden. Diese Steuervorrichtung liefert auch die
Steuersignale SS für die Antriebe AZ,AO,AS und die
Injektoren I1 bis I4. Die Steuerung erfolgt in ihrem
Ablauf durch zeitliche Vorgaben und in Anhängigkeit
von Meßsignalen MS, die von Druck-,Temperatur- und
Durchlaufgebern, die unter anderem in den Medienräumen und Formwänden angeordnet sind.

Die Einzelheiten, die mit den Besonderheiten des Betriebes der verschieblichen Teilwerkzeuge und Querschieber im Zusammenhang stehen, werden weiter unten erläutert.

Fig. 11 zeigt einen Längsschnitt und Fig. 12 einen Querschnitt durch einen zylindrischen Querschieber mit zwei Medienräumen MR5, MR6. Es handelt sich um ein gepreßtes Hohlprofil 5o mit über den Umfang verteilten Kanälen 57. Dem Innenraum 56, der den Medienraum MR6 bildet, wird über die Bohrungen 35, 37 (vgl. Fig. 6) das Heiz- bzw. Kühlmedium jeweils zugeführt bzw. von diesem abgeführt. Die Kanäle 57 bilden den Medienraum MR5, der über die Bohrungen 36, 38 mit Prozeßdampf, Druckluft, Vakuum bzw. Entsorgung jeweils versorgt wird.

Der Medienraum MR6 wird zweckmäßig mit heißer bzw. kalter Flüssigkeit durchströmt. Um den Medienbedarf gering zu halten, kann das Innenvolumen durch einen Einsatz 55 mit geringer Wärmekapazität teilweise ausgefüllt werden.

Da die Wandung 51 der Kanäle geheizt ist, wird bei der Zuführung von Prozeßdampf kein Kondensat entstehen, weshalb ein Entsorgungsanschluß durch Bohrung 38 in vielen Fällen nicht erforderlich ist, was eine weitere Vereinfachung der Konstruktion mit sich bringt, da die Kammer 39 dann entfällt.

Statt des gezeigten Hohlprofils können auch zusammengesetzte Ausführungen aus sternförmigen Innenteilen mit äußerem Mantel verwendet werden.

Eine besondere Ausführung des Querschiebers zeigen
Fig. 13 im Längsschnitt und Fig. 14 im Querschnitt.
Bei ihr ist die Formwand aus elastischem Material
als Mantel 71 ausgestaltet. Dieser Mantel 71 wird
durch ein perforiertes Rohr 72 nach innen abgestützt.
Der Innenraum ist abgedichtet und bildet den Medienraum MR6, der durch den Stutzen 75 und den nicht gezeigten gegenüberliegenden Anschluß mit Heiz- bzw
Kühlmedien versorgt werden kann. Sofern das Medium
unter Druck eingespeist wird, bläht sich der Mantel
auf und verdichtet ggf. den umliegenden Sinterkuchen.
Bei danach abfallendem Druck verringert sich der
Durchmesser des Mantels wieder, und der Formling
löst sich von der Formwand ab, wodurch ein Herausziehen des Querschiebers einfach möglich ist. Durch
eine vorzugsweise schräglaufende Armierung des Mantels
mit Glas- oder Stahlfasern 78 wird die Ausdehnung
des Mantels unter Druck begrenzt.

Das hier gezeigte Prinzip der Verwendung einer elastischen Formwand kann auch auf eine Ausführung mit
mehreren Medienräumen nach Fig. 11,12 oder auf flache
oder räumlich geformte Formwände übertragen werden.
Insbesondere können auch tiefe Hinterschneidungen und
umlaufende Rillen in Formlinge eingebracht werden,
in dem in der Formwand aufblähbare Wülste oder Schläuche
eingelagert werden, die beim Sintern vorzugsweise
mit Heizmedium unter Druck und beim Entformen ohne
Druck oder mit Unterdruck versorgt werden. Auf diese
Weise entstehen Formlinge, die eine gut verdichtete
Oberfläche an den kritischen Oberflächen besitzen,
und es können Formen sehr einfach verwirklicht werden, die mit starren Formwänden nur durch sehr komplizierte vielteilige Formwerkzeuge herzustellen sind.

Die Steuerung der verschiedenen Verfahrensschritte in Verbindung mit den verschieblichen Werkzeugen und Querschiebern ergibt sich einerseits aus der Problematik des vollständigen Füllens des Formhohlraumes und schnellen Sinterns und Abkühlens des Formlings auch in ungünstig gelegenen Randzonen und Ecken und andererseits aus der Forderung nach möglichst geringer Verformung des Formlings beim Entformen.

Das Füllen wird insbesondere dadurch unterstützt,daß die Düsen in den verschieblichen Teilwerkzeugen und Querschiebern mit der Entsorgung oder Vakuum verbunden werden. Auch wird ggf. die elastische Formwand in die eingezogene oder nicht geblähte Stellung durch Unter- oder Normaldruck verbracht.

Das Heizen und Kühlen der Formwände ist insbesondere für die verschieblichen Teilwerkzeuge und Querschieber vorgesehen, sofern es sich um relativ dickwandige Formlinge handelt. Um das Sintern auch in ungünstig gelegenen Zonen zu erreichen, wird z.B. auch der Querschieber-Formwand Sinterdampf zugeführt.

Der Druck auf die elastische Formwand während des Sinterns führt zu einer zusätzlichen Verbesserung der Oberflächenqualität. Das Abkühlen geschieht unterstützt durch Druckluft oder verbesserten Wärmekontakt durch Druck auf die elastische Formwand.

Das Ablösen der Formwand vom Formling zum Ausformen geschieht nach dem Abkühlen durch Beaufschlagung der Düsen mit Druckluft und/oder Einziehen oder Schrumpfen der elastischen Formwand durch Vakuum- oder Normaldruckversorgung des entsprechendn Medienraumes. Aus dem bereits zu den einzelnen Baugruppen gesagten und den jeweilig hier aufgeführten Vorgängen ergeben sich die Vorgaben für die Folge der Steuersignale für die Ventil- und Antriebssteuerung.

Die Zeitpunkte des Abschlusses der Sinterung der Verfestigung durch die Kühlung ergeben sich in bekannter Weise aus dem Druck und der Temperatur des Sinterkuchens an der Formwand.

Die Heiz- und Kühlzeiten können bei unterschiedlichen Formlingen und Formwandgeometrien unterschiedlich sein und werden zweckmäßig dementsprechend gesteuert, wobei für den Gesamtvorgang des Sinterns und Kühlens bis zum Öffnen des Form-werkzeuges der längste Vorgang maßgeblich ist. Besitzt das Formwerkzeug einen getrennten Öffnungsantrieb AO, so wird zweckmäßig der Formling mit der kürzesten Prozeßzeit als erster entformt, da dessen Öffnungs- und Auswurfzeit noch zur Kühlung des anderen Formlings genutzt werden kann.

Das Ablösen des Formlings durch Druckluft wird durch Messung des Druckabfalls im zugehörigen Medienraum oder in der Druckluftzufuhr festgestellt. Die Folge der Antriebsbetätigungen wird über Positionsmelder oder Endschalter an den Antrieben, deren Signale der Steuervorrichtung zugeführt werden, bestimmt.

- 2o -

Der Abschluß des Vorganges des Aufblähens oder Schrumpfens der elastischen Formwand wird durch Messung des Druckauf- oder -abbaues jeweils ermittelt.

In der volumengesteuerten elastischen Formwandverformung wird in den zugehörigen Medienraum nach druckloser Füllung mit Heiz- oder Kühlflüssigkeit eine abgemessene Menge davon bei geschlossenem Ausgangsventil zusätzlich in den Medienraum eingepreßt bzw. aus diesem herausgezogen. Dies kann z.B. über eine vorzugsweise umsteuerbare Dosierpumpe geschehen oder mittels eines Durchflußmessers an den entsprechenden Ventilen gesteuert werden.

Die Heiz- bzw. Kühlflüssigkeit bildet mit dem Versorgungssystem jeweils einen geschlossenen Medienkreis. Zur Aufrechterhaltung eines vorgegebenen Drucks, ist hinter dem Ausgang des Medienraumes ein Drosselventil zur Drucksteuerung eingesetzt. Diese Art der Heizung und Kühlung mit vollgefüllten Medienräumen unterscheidet sich von der üblichen Art der Verwendung von Heizdampf und Sprühflüssigkeit; sie ist wesentlich ökonomischer im Energieaufwand und eignet sich insbesondere für dünne und elastische Formwände.

Die dargestellten Verfahrensschritte ergänzen sich vorteilhaft in kombinierter Anwendung. So wird z.B. die Kühlzeit des Sinterkuchens erheblich reduziert, wenn gleichzeitig mit der Kühlflüssigkeit im geschlossenen Kreislauf über die Formwände durch Wärmeleitung und außerdem durch Druckluft oder Vakuum, insbesondere im Querstromverfahren zwischen den verschiedenen Teilwerkzeugen, der Formling direkt und durch Entzug von Verdampfungswärme gekühlt wird.

Patentansprüche
_____

1. Formwerkzeug zur Herstellung eines Formlings aus
   schäumbarem Kunststoff, bei dem Teilwerkzeuge (F11,
   F1) zwischen zwei zum Öffnen und Schließen verschieblichen Schilden (S1,S2) gehaltert sind und im geschlossenen Zustand einen Formhohlraum (FH) umschließen
   und mit einer Ver-/Entsorgungsvorrichtung (VE) jeweils verbunden sind, von der Kunststoff und Prozeßdampf, Druckluft und/oder Vakuum, dem Formhohlraum
   (FH) und Heiz-,Kühlmittel vorzugsweise   den Formwänden (Fw1,Fw2) über mindestens einen Medienraum
   (MR1 bis 5) steuerbar zuführbar sind, dadurch gekennzeichnet, d a ß   das Formwerkzeug aus mindestens
   drei Teilwerkzeugen (F11,F1,F12;F11,Q,F1) besteht,
   die jeweils mindestens einen Medienraum (MR1 bis 5)
   enthalten.

2. Formwerkzeug nach Anspruch 1 dadurch gekennzeichnet,
   d a ß   drei oder mehr Teilwerkzeuge (F11,F1,F12) in
   Öffnungsrichtung der Schilde (S1,S2) mindestens zwei
   Formhohlräume (FH1,FH2) umschließend hintereinander
   angeordnet und in mindestens einer Führung (B1,B2)
   gegeneinander in Öffnungsrichtung verschieblich gelagert sind und darauf jeweils, die nicht an den
   Schilden (S1,S2) befestigten, Teilwerkzeuge (F1)
   durch abstandsbegrenzende Mitnehmer (MN1,MN2) und/
   oder einen Öffnungsantrieb (AO) in jeweils zu benachbart gelagerten Teilwerkzeugen (F11,F12) jeweils in Öffnungs- und Schließposition des Formhohlraumes (FH) verbringbar sind.

3. Formwerkzeug nach Anspruch 2. dadurch gekennzeichnet, daß die Formhohlräume (FH1,FH2) insbesondere symmetrisch angeordnet sind und das in der Mittelebene (ME) liegende Teilwerkzeug (F1) insbesondere symmetrisch aufgebaut ist, wobei ggf. die Medienräume (MR3,MR4) jeweils als ein Raum (MR4) und/oder bezüglich der Versorgung parallel geschaltete Räume (MR3', MR3") ausgestaltet sind.

4. Formwerkzeug nach Anspruch 1,2 oder 3 dadurch gekennzeichnet, daß der Medienraum (MR3,MR3',MR3",MR5) der verschieblich gelagerten Teilwerkzeuge (F1,Q) durch Düsen (D) mit den Formhohlräumen (FH1,2) verbunden ist.

5. Formwerkzeug nach einem der vorherigen Ansprüche dadurch gekennzeichnet, daß die Formwände (FW2) der verschieblich gelagerten Teilwerkzeuge (F1) aus vorzugsweise hochwärmeleitfähigen dünnwandigen Platten (11,12) bestehen, die vorzugsweise durch Hohlprofile (14), die einen Medienraum (MR4) bilden, und/oder Abstandshalter (13) gegeneinander abgestützt sind, und vorzugsweise die Formwände (FW2) mit den Rohren (14) durch Löten oder Schweißen verbunden sind, so daß zwischen den Hohlprofilen (14) und den Formwänden (FW2,FW2') der weitere Medienraum (MR3) entsteht.

6. Formwerkzeug nach einem der Ansprüche 1 bis 4 dadurch gekennzeichnet, daß die Formwände (FW2) des verschieblich gelagerten Teilwerkzeuges vorzugsweise aus mehreren Platten bestehen und die Medienräume (MR3,MR4) versetzt gegeneinander in mindestens einer der Platten mäanderformig gefräst, gegossen oder geprägt sind und durch eine Lötung,Schweißung,Klebung

- 23 -

und/oder eine Dichtung (17) der Platten (11,11')
gegeneinander abgedichtet und wärmeleitend verbunden
sind und die Medienräume (MR3,MR4) mindestens einseitig an ihren Enden (42,43;44,45) durch Bohrungen
(60) und/oder Nippel (61) herausgeführt sind.

7. Formwerkzeug nach Anspruch 2 dadurch gekennzeichnet,
d a ß die Führung (B1,B2) aus mindestens zwei
parallelen Führungssäulen (B1,B2) besteht, die in
den Teilwerkzeugen (F11,F12) und/oder in den Schilden
(S1,S2),an denen diese jeweils befestigt sind, verschieblich gelagert sind und vorzugsweise endseitig
mit Mitnehmern (MN1) versehen sind.

8. Formwerkzeug nach Anspruch 2 oder 7 dadurch gekennzeichnet, d a ß die Führungssäule (B2,B23) jeweils
in Führungsbuchsen (B21,B22) geführt ist, die an den
Teilwerkzeugen (F11,F12) jeweils zwischen den Schilden
(S1,S2) und dem verschieblichen Teilwerkzeug (F1) befestigt sind, und die Führungssäule (B2,B23) an dem
verschieblich gelagerten Teilwerkzeug (F1) befestigt
ist.

9. Formwerkzeug nach Anspruch 8 dadurch gekennzeichnet,
d a ß mindestens eine der Führungsbuchsen (B21,B22)
als hydraulicher oder pneumatischer Zylinder ausgebildet ist und die Führungssäule (B2) den Kolben
bildet und der Zylinder mit einem gesteuerten Hydraulik-
oder Druckluftsystem für den Öffnungsantrieb (AO)
verbunden ist.

10. Formwerkzeug nach Anspruch 8 dadurch gekennzeichnet,
d a ß die Führungssäule (B23) hohl ist und der Hohlraum mit dem Medienraum (MR3,MR4) im verschieblichen

- 24 -

Teilwerkzeug (F1) verbunden ist und der Hohlraum der
Führungsbuchse (B21) mit der Ver-/Entsorgungsvor-
richtung (VE) verbunden ist.

11. Formwerkzeug nach Anspruch 2 dadurch gekennzeichnet,
d a ß jeweils in dem Teilwerkzeug (F11,F12) das an
dem Schild (S1,S2) befestigt ist, parallel zu den
Führungssäulen (B1,B2) ein Auswerfer (AW) durch
den Schild (S1,S2) hinausragend verschieblich gelagert ist, der über Mitnehmer (MN3,MN4,MN5) endseitig mit den Führungssäulen verbunden ist.

12. Formwerkzeug nach Anspruch 2 dadurch gekennzeichnet,
d a ß der Mitnehmer (MN2)ein Seil z.B.aus Stahl ist,
das an den Teilwerkzeugen (F11,F1;F1,F2) mit einer
solchen Länge zwischen diesen befestigt ist, daß die
gesinterten Formlinge jeweils zwischen den Teilwerkzeugen (F11,F1;F1,F12) herausfallen können oder entnehmbar sind.

13. Formwerkzeug nach Anspruch 1 dadurch gekennzeichnet,
d a ß vorzugsweise senkrecht zur Öffnungsrichtung
mindestens eines der Teilwerkzeuge als Querschieber
(Q) in mindestens einer Teilform (F11,F1,F12) die
vorzugsweise an dem Schild (S1,S2) befestigt ist,
in den Formhohlraum (FH1,FH2) hineinragend als Form-
oder Faconkern verschieblich gelagert ist und der
Querschieber (Q) mit einem Schieberantrieb (AS) verbunden ist, der ihn gesteuert in den Formhohlraum
(FH1) verbringen und aus diesem herausziehen kann.

14. Formwerkzeug nach Anspruch 13 dadurch gekennzeichnet,
d a ß der Schieberantrieb (AS) durch an dem jeweiligen
Teilwerkzeug (F11,F12) angeordnete hydraulische oder
pneumatische Zylinder (AS11,AS12;AS13) gebildet wird.

15. Formwerkzeug nach Anspruch 13 dadurch gekennzeichnet, d a ß der Querschieber (Q) hohl z.B. als dünnwandiges Rohr oder Strangpreßprofil mit mindestens zwei Hohlquerschnitten (56,57), die vorzugsweise alternierend auf dem Umfang verteilt verlaufen, ausgebildet ist und mindestens einer der Hohlquerschnitte (56,57) jeweils einen Medienraum (MR5,MR6) bildet, der jeweils ein- oder beidendig mit der Ver-/Entsorgungsvorrichtung verbunden ist, und vorzugsweise einer der Medienräume (MR5) durch Düsen (D1) mit dem Formhohlraum (FH) verbunden ist.

16. Formwerkzeug nach einem der vorherigen Ansprüche dadurch gekennzeichnet, d a ß mindestens eine der Formwände aus elastischem Material z.B. Silikonkautschuk oder Polytetrafluoräthylen besteht und z.B. als Mantel (71) ausgebildet ist und die Formwand (FW1,2,3,4) durch eine Stützkonstruktion z.B. Stege (13) oder ein Rohr (72) und/oder durch eine eingelagerte Armierung (78) z.B. aus Glasfasern oder Stahldraht in der elastischen Verformbarkeit begrenzt ist und die Formwand (FW1,2,3,4) allseits so abgedichtet ist, daß sie mindestens einen Medienraum (MR1 bis 6) beinhaltet, wovon einer bevorzugt der zum Formhohlraum (FH1,2) geschlossene Medienraum (MR4,6) ist.

17. Formwerkzeug nach Anspruch 15 oder 16 dadurch gekennzeichnet, d a ß der Querschieber (Q) in dem Teilwerkzeug (F11) bzw. der Formwand (FW1) mit Dichtungen (30÷34) gelagert ist und über Bohrungen und/oder Nuten (35÷39) die Medienräume (MR5,MR6) in dem Querschieber (Q) mit entsprechend zu versorgenden Medienräumen (MR1,MR2) des Teilwerkzeuges (F11) oder der Formwand (FW1) jeweils mindestens einseitig verbunden sind.

18. Formwerkzeug nach einem der vorherigen Ansprüche dadurch gekennzeichnet, d a ß der Kunststoff durch Injektoren (I1 bis I4) durch eine Formwand,die quer zu den Schilden (S1,S2) verläuft, vorzugsweise von oben in die Formhohlräume (FH1,2) eingefüllt wird.

19. Formwerkzeug nach einem der vorherigen Ansprüche dadurch gekennzeichnet, d a ß die Antriebe (AZ,AS,AO) mit Positionsmeldern verbunden sind,die die jeweilige Position an eine Steuervorrichtung (St) signalisieren, und die Teilwerkzeuge (F11,F1,Q,F12) mit Temperatur- und/oder Druckmeßfühlern versehen sind, die die jeweilige Temperatur der Medien in den Medienräumen (MR1-5) und/oder der Formwände (FW1-4) bzw. den jeweiligen Druck der Medien und/oder der Sinterkuchen messen und an die Steuervorrichtung (St) signalisieren, die meßsignalabhängig die Ver-/Entsorgungsvorrichtung (VE) und die Antriebe (AZ,AS,AO) steuert.

20. Verfahren zur Steuerung eines Formwerkzeuges nach einem der vorherigen Ansprüche dadurch gekennzeichnet,d a ß
-während des Injizierens von Kunststoff in den Formhohlraum (FH1,FH2) die Medienräume (MR1,MR3,MR5), die durch Düsen (D,D1) mit dem Formhohlraum (FH1) verbunden sind, mit der Entsorgung oder Vakuumversorgung verbunden sind
-und/oder während des Sinterns die genannten Medienräume (MR1,MR3,MR5) gleichzeitig und/oder paarweise alternierend mit der Prozeßdampfversorgung bzw. der Entsorgung verbunden sind
-und/oder während des Druckabbaues mit Vakuum, der Entsorgung und/oder Preßluft verbunden sind
-und/oder vor oder während des Herausziehens der Querschiebers (Q) und/oder des Öffnens des Formwerkzeuges und/oder Auswerfens des Formlings zumindest kurzzeitig mit der Druckluftversorgung verbunden sind.

21. Verfahren zur Steuerung eines Formwerkzeuges nach einem der Ansprüche 1 bis 2o dadurch gekennzeichnet, d a ß die Medienräume (MR2,MR4), die nicht mit dem Formhohlraum (FH1) verbunden sind, während des Schließens des Formwerkzeuges, des Injizierens und Sinterns des Kunststoffes mit einem Heizmedium versorgt werden und vor und bedarfsweise während des Öffnens des Formwerkzeuges und des Auswerfens des Formlings mit einem Kühlmedium versorgt und jeweils entsorgt werden.

22. Verfahren zur Steuerung eines Formwerkzeuges nach einem der Ansprüche 1 bis 19 dadurch gekennzeichnet, d a ß der Schieberantrieb (AS) jeweils vorzugsweise vor oder während des Öffnens bzw. während des Schließens des Schildantriebes (AZ) entsprechend zeitlich versetzt bzw. parallel betätigt wird.

23. Verfahren zur Steuerung eines Formwerkzeuges nach einem der Ansprüche 1 bis 19 dadurch gekennzeichnet, d a ß der Öffnungsantrieb (AO) während des Öffnens der Schilde (S1,S2) bzw. des einen Paares von Teilwerkzeugen (F1,F12) schließt, bis der Formling aus dem Formhohlraum (FH2) ausgestoßen und entfernt ist, und anschließend öffnend betätigt wird und nach Öffnung des anderen Paares von Teilwerkzeugen (F1,F11) der andere Formling ausgestoßen wird.

24. Verfahren zur Steuerung eines Formwerkzeuges nach Anspruch 16 dadurch gekennzeichnet, d a ß der geschlossene Medienraum (MR4,6) mit der Ver-/Entsorgung jeweils einen geschlossenen Heiz-/Kühlkreis bildet und
-während des Sinterns und/oder Abkühlens mit einem Medium z.B. Heizdampf oder -flüssigkeit bzw. Kühlflüssigkeit oder Druckluft unter einem Druck,der vorzugsweise größer als der Sinterdruck ist, gefüllt ist und
-während des Injizierens und Herausziehens bzw.

- 28 -

Öffnens mit einem Druck unter dem Entformungsdruck bzw. drucklos mit dem entsprechenden Medium gefüllt ist.

25. Verfahren zur Steuerung eines Formwerkzeuges nach Anspruch 24 dadurch gekennzeichnet, d a ß der Medienraum (MR4,6) jeweils entsprechend

- mit einem vorgegebenen Volumen von Heiz- bzw. Kühlflüssigkeit gefüllt wird, so daß die Formwand (FW1, 2,3,4) während des Sinterns bzw. Abkühlens eine bestimmte Verformung zur Kompression des Sinterkuchens erfährt,

- und das genannte Volumen oder der Druck vor dem Herausziehen oder Entformen um ein vorgegebenes Maß verringert wird, so daß die Formwand (FW1,2,3,4) sich vom Sinterkuchen löst.

26. Verfahren zur Steuerung eines Formwerkzeuges nach Anspruch 16 dadurch gekennzeichnet, d a ß der Druck im geschlossenen Medienraum (MR4,6) nach dem Öffnen des Formwerkzeuges zum Auswerfen des Formlings erhöht wird.

27. Formling aus gesintertem Schaumstoff, vorzugsweise Polystyrolschaumstoff dadurch gekennzeichnet, d a ß der Formling Querkanäle oder Vertiefungen durch Form- oder Faconkerne besitzt, deren Randbereich durch Zusammenpressen beim Sintern und/oder Abkühlen verdichtet ist.

0118575

Fig.1

Fig.2

Fig. 3

15   16   D                    11'   16'   40        FW2        D   17   11
   MR4   MR3                  41                               

Fig. 4

MR4

MR3"

I

45

43

40        41

MR3                            42   44

Fig. 5

MR4   80   MR3   81   FW2   D

2/6

0118575

Fig.6

0118575

Fig.7

AS11
S1
AS12
F11
Q1
T1
F1
T2
F12
Q2
AS13
S2
AZ

Fig.8

S1
AO
F11
T1
F1
T2
F12
S2
AZ

Fig.9

S1
AO
F11
B2
B21

4/6

0118575

Fig.10

Fig.12

Fig.14

Fig.11

Fig.13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 488 918 (FIRMA HANS REICHENECKER STOROPACK)<br><br>* Insgesamt *<br><br>--- | 1,2,4, 6,7,19 ,23,24 ,26 | B 29 D 27/04 |
| X | DE-A-2 940 815 (HANS ERLENBACH)<br>* Ansprüche 8-16; Figur 1 *<br><br>--- | 20,21 | |
| E | EP-A-0 079 403 (FRESSE S.A.)<br><br>* - Zusammenfassung; Ansprüche; Figur 1 *<br><br>--- | 13-15, 17,22, 27 | |
| A | DE-A-1 932 138 (ERICH LENDLE & CO.)<br>* Figuren 1,2 *<br><br>--- | 3 | |
| A | FR-A-2 457 756 (CIVAG A.G.)<br>* Ansprüche *<br><br>--- | 5,6 | RECHERCHIERTE SACHGEBIETE (Int. Cl. 3)<br><br>B 29 D<br>B 29 F<br>B 30 B |
| A | FR-A-2 449 518 (JEANINE FRERE)<br>* Seite 2, Zeile 1 - Seite 2, Zeile 37; Ansprüche; Figur *<br><br>--- | 5,18 | |
| A | FR-A-1 600 363 (ERICH LENDLE & CO.)<br>* Zusammenfassung; Seite 2, Zeile 16 - Seite 3, Zeile 23 *<br><br>---      -/- | 16 | |

Der vorliegende Recherchenbericht wurde für alle Patentansprüche erstellt.

| Recherchenort<br>DEN HAAG | Abschlußdatum der Recherche<br>29-11-1983 | Prüfer<br>ESCHBACH D.P.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPA Form 1503. 03.82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.³) |
|---|---|---|---|
| A | DE-A-2 057 016  (BOPPARDER GmbH) <br> * Anspruch 1; Figur 1 * | 13 | |
| | --- | | |
| A | EP-A-0 061 072  (MASCHINENFABRIK KÖPPERN) <br> * Seite 6, Zeile 23 - Seite 8, Zeile 24; Figuren 4,5 * | 8,11 | |
| | --- | | |
| A | FR-A-2 043 133  (HAMMERLE AG) <br> * Ansprüche; Figur 4 * | 9 | |
| | ----- | | |

RECHERCHIERTE
SACHGEBIETE (Int. Cl.³)

Der vorliegende Recherchenbericht wurde für alle Patentansprüche erstellt.

| Recherchenort | Abschlußdatum der Recherche | Prüfer |
|---|---|---|
| DEN HAAG | 29-11-1983 | ESCHBACH D.P.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82